# NEUE EUROPÄISCHE PATENTSCHRIFT

(11) **EP 2 450 214 B2**
(45) Veröffentlichungstag und Bekanntmachung des Hinweises auf die Entscheidung über den Einspruch: **02.04.2025**
(45) Hinweis auf die Patenterteilung: 21.02.2018
(21) Anmeldenummer: 11187093.7
(22) Anmeldetag: 28.10.2011
(51) Int. Cl.: B60K 6/46, B60K 6/26, B60K 6/34, B60L 11/08, B60K 17/12, B60W 50/023

(54) **Pistenraupe**
Piste caterpillar
Dameur de piste

(30) Priorität: 05.11.2010 DE 102010043511
(43) Veröffentlichungstag der Anmeldung: 09.05.2012
(73) Patentinhaber: Kässbohrer Geländefahrzeug AG, 88471 Laupheim (DE)
(72) Erfinder: Mayer, Andreas, 89597 Munderkingen (DE); Luigart, Christof, 89155 Erbach (DE); Betz, Peter, 88471 Baustetten (DE); Kuhn, Michael, 88480 Achstetten (DE)
(74) Vertreter: Patentanwälte Ruff, Wilhelm, Beier, Dauster & Partner mbB

(56) Entgegenhaltungen:
- WO-A1-2010/103117
- DE-A1- 10 005 527
- DE-A1- 102006 052 525
- DE-A1- 4 332 378
- DE-C1- 19 802 549
- US-A- 5 350 031
- US-A- 5 907 194
- US-A1- 2003 205 422
- US-A1- 2007 235 236
- US-A1- 2009 066 159
- US-B2- 6 691 806
- "Technical data for the PistenBully 600 E+", PISTENBULLY.COM, April 2016 (2016-04-01), Retrieved from the Internet <URL:https://www.pistenbully.com/fileadmin/content_pistenb ully/modul-8-download/Fahrzeuge/600_E_- _April_2016/technische-daten-600-eplus-en.pdf>
- WikiArtikel (https://en.wikipedia.org/wiki/Rectifier)

## Beschreibung

Die Erfindung betrifft eine Pistenraupe mit einem Verbrennungsmotor sowie mit wenigstens einem Generator, der über eine Leistungselektronik mit wenigstens einem Elektromotor für einen rotatorischen Funktionsantrieb der Pistenraupe in Verbindung steht.

Eine derartige Pistenraupe ist aus der EP 0 895 495 B1 bekannt. Die Pistenraupe stellt ein Hybridfahrzeug dar, bei dem ein Dieselmotor einen elektrischen Generator antreibt, der über eine Leistungselektronik einen elektrischen Fahrantrieb, nämlich den Kettenantrieb, speist. Der Kettenantrieb weist für jede der beiden Fahrketten jeweils ein Turasrad auf, das die jeweilige Fahrkette antreibt. Jedes Turasrad wird durch jeweils einen Elektromotor angetrieben. Die Pistenraupe weist zudem eine Heckfräse auf, deren Fräsantrieb ebenfalls durch einen Elektromotor gebildet wird, der mittels der Leistungselektronik über den Generator gespeist wird.

Die WO 94/09548 A1 offenbart eine ähnliche dieselelektrische Pistenraupe, bei der ebenfalls ein Dieselmotor einen Generator antreibt, der über eine entsprechende Leistungselektronik elektrische Fahr- und Fräsenantriebe speist.

Die US 2007/0235236 A1 offenbart ein Baufahrzeug mit einem Kettenantrieb, der über zwei parallel geschaltete elektrische Maschinen und einen einzelnen Verbrennungsmotor antreibbar ist. Die beiden elektrischen Maschinen können zusätzlich als Generatoren betrieben werden. Die Möglichkeit des Betreibens der elektrischen Maschinen sowohl als Generatoren als auch als Elektromotoren gewährleistet eine bessere Variabilität des elektrischen Kettenantriebs, eine erhöhte Leistungsfähigkeit und einen guten Wirkungsgrad.

Aus der US 5,350,031 ist ein Hybridantrieb für einen Personenkraftwagen bekannt, der mit zwei Generatoren versehen ist. Die beiden Generatoren dienen dazu, einen Elektromotor für den Radantrieb des Personenkraftwagens zu speisen. Die beiden Generatoren werden bei unterschiedlichen Drehzahlen des Verbrennungsmotors aktiviert, um einen verbesserten Wirkungsgrad im Fahrbetrieb des Personenkraftwagens zu erzielen.

Aufgabe der Erfindung ist es, eine Pistenraupe der eingangs genannten Art zu schaffen, die einen ausreichenden Notlaufbetrieb ermöglicht.

Diese Aufgabe wird durch die Merkmale des Anspruchs 1 gelöst. Die beiden elektrischen Generatoren besitzen die gleiche Leistung. Bevorzugt weist jeder Generator eine Leistung zwischen 100 und 200kW vorzugsweise 140kW, auf. Da die zwei parallel geschalteten Generatoren im normalen Betrieb der Pistenraupe als Doppelgenerator wirken, steht somit die doppelte Leistung, insbesondere zwischen 200 und 400kW, bevorzugt 280kW, zur Verfügung. Durch die erfindungsgemäße Lösung ist beim Ausfall eines Generators oder im Fehlerfall eines Generators immer noch der zweite Generator zur Verfügung, um eine entsprechende Funktion der Pistenraupe wie insbesondere eine Fahrfunktion, eine Fräsenfunktion, eine Windenfunktion o.ä. in einen sicheren Zustand zu überführen und/oder einen Notlaufbetrieb zu gewährleisten. Als rotatorischer Funktionsantrieb ist ein Fahrantrieb, insbesondere ein Turasradantrieb, ein Fräswellenantrieb für eine Heckfräse oder ein Windenantrieb für eine auf der Pistenraupe angeordnete Winde vorgesehen.

Durch die erfindungsgemäße Lösung wird ein redundantes System erzielt.

Erfindungsgemäß ist für jeden Generator ein elektrisches Schaltelement vorgesehen, das den Generator elektrisch von der Leistungselektronik abtrennen kann. Als elektrisches Schaltelement ist insbesondere ein Relais vorgesehen, das in eine elektrische Leitung zwischen der Leistungselektronik und dem zugeordneten Generator eingebaut ist. Durch diese Lösung ist es möglich, den Generator in einem Fehlerfall oder auch bei einem Ausfall des Generators von dem Antriebssystem zu trennen und über den anderen, noch funktionierenden Generator einen Notlaufbetrieb zu schaffen.

Erfindungsgemäß ist eine elektronische Steuerung vorgesehen, die das Schaltelement abhängig von einer Funktionsüberwachung des Generators aktiviert für ein Abtrennen des Generators von der Leistungselektronik. Die elektronische Steuerung weist Mittel zur Überwachung der Funktion jedes Generators auf. Entsprechende Daten werden an eine Vergleichs- und Auswerteeinheit der elektronischen Steuerung übermittelt, die dann abhängig von dem Ergebnis des Vergleichs und der Auswertung eine entsprechende Ansteuerung des elektrischen Schaltelementes zum Abtrennen des Generators vornimmt.

Nachfolgend ist ein bevorzugtes Auführungsbeispiel der Erfindung beschrieben und anhand der Zeichnungen dargestellt.
- Fig. 1: zeigt schematisch in einer Draufsicht eine Ausführungsform einer erfindungsgemäßen Pistenraupe mit strichpunktiert angedeutetem Antriebssystem und
- Fig. 2: in einem vergrößerten Blockschaltbild das Antriebssystem der Pistenraupe nach Fig. 1 und
- Fig. 3: schematisch ein Blockschaltbild ähnlich Fig. 2.

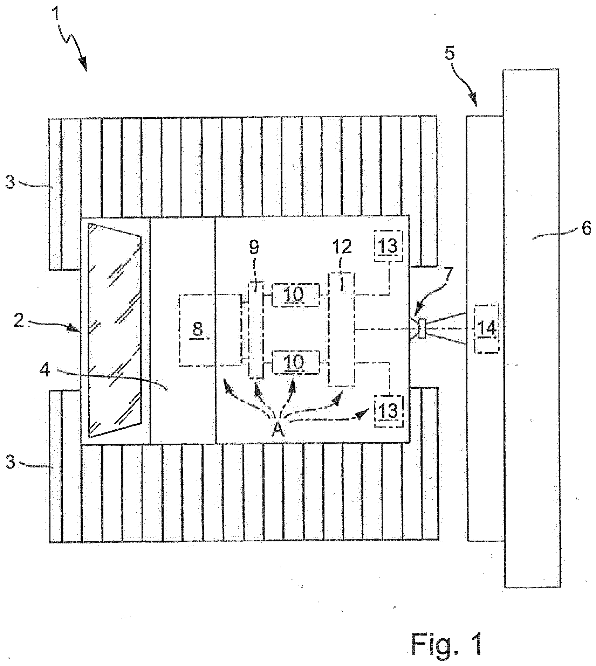

Eine Pistenraupe 1 nach Fig. 1 weist ein Fahrgestell 2 auf, auf dem in grundsätzlich bekannter Weise ein Fahrzeugaufbau mit einer Fahrerkabine 4 sitzt. Die Pistenraupe 1 weist auf gegenüberliegenden Seiten jeweils eine Fahrkette 3 auf, die gemeinsam den Kettenantrieb und demzufolge den Fahrantrieb für die Pistenraupe 1 übernehmen. Jede Fahrkette 3 ist über ein nicht näher dargestelltes Turasrad in einem Heckbereich des Fahrgestells 2 antreibbar. Heckseitig ist das Fahrgestell 2 der Pistenraupe 1 mit einem Heckgeräteträger 7 versehen, an dem beim dargestellten Ausführungsbeispiel eine Heckfräse 5 gehalten ist. Die Heckfräse 5 umfasst eine auch als Glätteinrichtung bezeichnete Finisheranordnung 6. Die Pistenraupe 1 wird mit einem nachfolgend näher beschriebenen Antriebssystem A betrieben, das im Wesentlichen an dem Fahrgestell 2 angeordnet ist. Das Antriebssystem A stellt ein Hybridantriebssystem dar, wobei ein Verbrennungsmotor in Form eines Dieselmotors 8 mit einer elektrischen Antriebseinheit kombiniert ist.

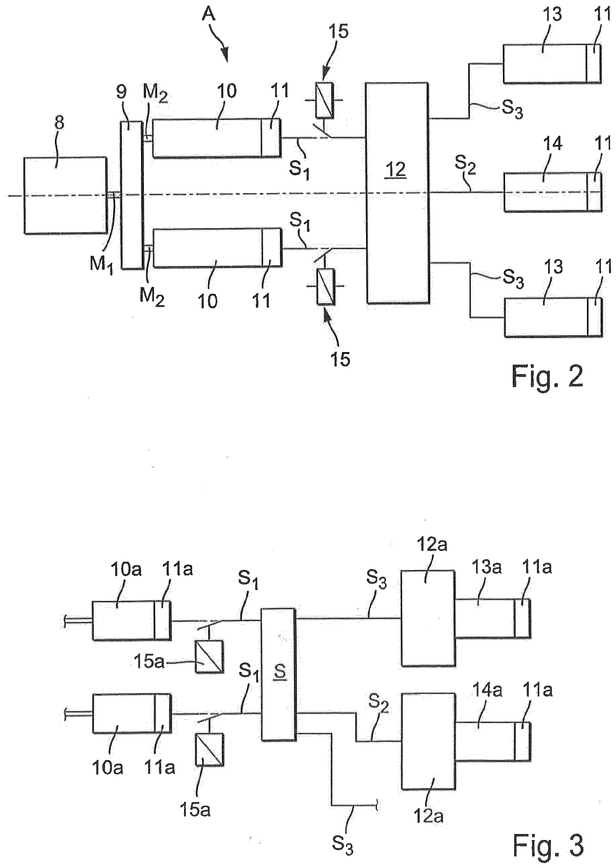

Wie anhand der Figur 2 erkennbar ist, ist an dem Dieselmotor 8 ein Verteilergetriebe 9 angeflanscht, das mechanisch mit dem Dieselmotor 8 wirkverbunden ist. Die mechanische Wirkverbindung wird durch das Bezugszeichen M₁ verdeutlicht. Das Verteilergetriebe 9 weist zwei Abtriebsstränge auf, an die jeweils ein elektrischer Generator 10 angeflanscht ist. Hierzu ist jeweils eine Welle jedes Generators 10 über eine mechanische Wirkverbindung M₂ mit einem entsprechenden Ausgang des Verteilergetriebes 9 mechanisch verbunden. Eine Antriebswelle des Dieselmotors 8 steht demzufolge über das Verteilergetriebe 9 mechanisch mit den Wellen der beiden Generatoren 10 in Verbindung. Die beiden Generatoren 10 sind identisch ausgeführt und in Parallelschaltung zueinander an dem Verteilergetriebe 9 angeflanscht. Beide Generatoren 10 weisen jeweils einen integrierten Frequenzumrichter 11 auf, so dass beide Generatoren 10 über jeweils eine elektrische Verbindung S₁ eine Leistungselektronik 12 mit Gleichstrom speisen. An die Leistungselektronik 12 sind drei Elektromotoren angeschlossen, von denen die beiden Elektromotoren 13 zum Antrieb der Turasräder der rechts- und linksseitigen Fahrketten 3 dienen. Der Elektromotor 14 ist zum Antreiben einer Fräswelle der Heckfräse 5 vorgesehen. Die Leistungselektronik 12 steuert über jeweils eine Steuerleitung S₃ den jeweiligen Elektromotor 13 für den rechts- oder linksseitigen Fahrantrieb und über eine Steuerleitung S₂ den Elektromotor 14 für den Fräsantrieb an.

Bei dem dargestellten Ausführungsbeispiel hat jeder Generator eine Leistung von 140kW. Da die beiden Generatoren 10 in Parallelschaltung betrieben werden, ergibt sich die Funktion eines Doppelgenerators mit einer Leistung von 280kW. Die Leistungselektronik 12 stellt einen Zwischenkreis dar, der einen gemeinsamen Energiepool für alle elektrischen Einheiten innerhalb des Antriebssystem A bildet. Die Elektromotoren 13 und 14 sind jeweils Permanentsynchronmotoren, die mit einer Spannung von 750V Gleichstrom arbeiten. Auch in den Permanentsynchronmotoren der Elektromotoren 13 und 14 sind Stromgleichrichter, d.h. Frequenzumrichter 11, integriert. Auch die Leistung jedes Elektromotors 13, 14 beträgt beim dargestellten Auführungsbeispiel 140kW.

Wie anhand der Fig. 2 erkennbar ist, ist jede elektrische Leitung S₁ zwischen dem jeweiligen Generator 10 und der Leistungselektronik 12 über ein als elektrisches Schaltelement dienendes Relais 15 abtrennbar. Das jeweilige Relais 15 wird in Abhängigkeit von einer Funktionsüberwachung des zugeordneten Generators 10 angesteuert. Die Funktionsüberwachung kann über die Leistungselektronik 12 oder eine separate elektronische Steuereinheit erfolgen. Die Ansteuerung des jeweiligen Relais 15 erfolgt dann, wenn eine Fehlfunktion oder ein Ausfall des entsprechenden Generators 10 erkannt wurde. Das Relais 15 in der jeweiligen Leitung S₁ trennt dann die elektrische Verbindung zwischen Generator 10 und Leistungselektronik 12. Aufgrund des redundanten Aufbaus verbleibt nach Abtrennen des einen Generators noch der zweite Generator, mit dem zumindest ein Notlaufbetrieb des elektrischen Teils des Antriebsystems A ermöglicht ist.

Die Leistungselektronik 12 umfasst auch Fahrantriebsregler für die Elektromotoren 13 des Kettenantriebs sowie einen Regler für den Elektromotor 14 des Fräswellenantriebs wie auch ein durch den Fahrer aktiviertes Sollwerteingabemodul und verschiedene elektronische Leistungsbereitstellungsmodule, die entsprechende Sollwerte mit durch Überwachungseinheiten ermittelten Istwerten vergleichen und abhängig von einem Ergebnis der Auswertung die Regler entsprechend ansteuern.

Die erfindungsgemäße Ausführungsform nach Fig. 3 entspricht im Wesentlichen der zuvor anhand der Fig. 2 beschriebenen Ausführungsform. Zur Vermeidung von Wiederholungen wird auf die Offenbarung zu der Ausführungsform nach Fig. 2 verwiesen. Funktionsgleiche Bauteile werden bei der Ausführungsform nach Fig. 3 mit den gleichen Bezugszeichen unter Hinzufügung des Buchstabens a versehen. Wesentlicher Unterschied bei der Ausführungsform nach Fig. 3 ist es, dass keine zentrale Leistungselektronik 12 wie bei der Ausführungsform nach den Figuren 1 und 2 vorgesehen ist. Vielmehr ist jedem Elektromotor 13a, 14a eine eigene, individuelle Leistungselektronik 12a zugeordnet, die auch räumlich unmittelbar an dem jeweiligen Elektromotor 13a, 14a angeordnet ist.

In gleicher Weise ist es in einer nicht dargestellten Ausführungsform der Erfindung vorgesehen, ergänzend oder alternativ den beiden Generatoren 10a eine eigene Leistungselektronik zuzuordnen.

Eine Elektronikkomponente S dient dazu, die beiden Generatoren 10a in geeigneter Weise mit den einzelnen Leistungselektroniken 12a und den zugeordneten Elektromotoren 13a, 14a zu verbinden, um die gewünschte Energiespeisung zu bewirken und zudem eine entsprechende Rückspeisung von den Elektromotoren 13a, 14a zu den Generatoren 10a hin zu ermöglichen. Die dritte Leitung S₃ ist aus Übersichtlichkeitsgründen lediglich angedeutet. Auch diese führt zu einer weiteren Leistungselektronik 12a, die dem anderen Elektromotor 13a zugeordnet ist.

## Patentansprüche

1. Pistenraupe mit einem Verbrennungsmotor sowie mit wenigstens einem Generator, der über eine Leistungselektronik mit wenigstens einem Elektromotor für einen rotatorischen Funktionsantrieb der Pistenraupe in Verbindung steht, **dadurch gekennzeichnet, dass** zwei parallel geschaltete Generatoren (10) mit gleicher Leistung zwischen Verbrennungsmotor (8) und Leistungselektronik (12) vorgesehen sind, und dass als Funktionsantriebe Fahrmotoren für einen Kettenantrieb (13), einen Fräswellenantrieb (14) und/oder einen Windenantrieb vorgesehen sind, dass für jeden Generator (10) ein elektrisches Schaltelement (15) vorgesehen ist, das den Generator (10) elektrisch von der Leistungselektronik (12) abtrennen kann, und dass eine elektronische Steuerung vorgesehen ist, die das Schaltelement (15) abhängig von einer Funktionsüberwachung des Generators (10) aktiviert für ein Abtrennen des Generators (10) von der Leistungselektronik (12).

## Claims

1. Piste grooming vehicle with a combustion engine and with at least one generator which is in connection via power electronics with at least one electric motor for a rotatory functional drive of the piste grooming vehicle, **characterized in that** two generators (10) connected in parallel and having equal performance are provided between the combustion engine (8) and the power electronics (12), **in that** drive motors are provided as functional drives for a chain drive (13), a cutter shaft drive (14) and/or a winch drive, **in that** an electric switching element (15) is provided for each generator (10) that can electrically separate said generator (10) from the power electronics (12), and **in that** an electronic control device is provided which activates the switching element (15) for separating the generator (10) from the power electronics (12) depending on a function monitoring of the generator (10).

## Revendications

1. Dameuse chenillée avec un moteur à combustion ainsi qu'avec au moins un générateur qui est en liaison via un circuit électronique de puissance avec au moins un moteur électrique pour un entraînement fonctionnel en rotation de la dameuse chenillée, **caractérisée en ce que** deux générateurs branchés en parallèle (10) de puissance égale sont prévus entre le moteur à combustion (8) et le circuit électronique de puissance (12), et que des moteurs de traction sont prévus comme entraînements fonctionnels pour un entraînement par chaîne (13), un entraînement d'arbre de souffleuse (14) et/ou un entrainement de treuil, qu'est prévu pour chaque générateur (10) un élément de commutation électrique (15) qui peut couper électriquement le générateur (10) du circuit électronique de puissance (12), et qu'est prévue une commande électronique qui active l'élément de commutation (15) selon une surveillance de fonctionnement du générateur (10) afin de couper le générateur (10) du circuit électronique de puissance (12).
